# EUROPÄISCHE PATENTANMELDUNG

(11) **EP 1 624 540 A2**
(43) Veröffentlichungstag der Anmeldung: **08.02.2006**
(21) Anmeldenummer: 05105532.5
(22) Anmeldetag: 22.06.2005
(51) Int. Cl.: H01R 43/14

(54) **Verfahren zum leistungsgesteuerten Betreiben eines Elektromotors an einem Gleichspannungsnetz**

(30) Priorität: 05.08.2004 DE 102004037918
(71) Anmelder: ROBERT BOSCH GMBH, 70442 Stuttgart (DE)
(72) Erfinder: Haderer, Guenter, 77815 Buehl (DE); Fischer, Christoph, 67480 Auenheim (FR)

(57) **Zusammenfassung**

Es wird ein Verfahren zum leistungsgesteuerten Betreiben eines Elektromotors an einem Gleichspannungsnetz vorgeschlagen, insbesondere ein Verfahren zum getakteten Betreiben eines Permanentmagnetmotors am Bordnetz eines Kraftfahrzeuges mittels Pulsweitenmodulation, wobei die Motorleistung dem Anker (11) über einen Kollektor (16) und über Bürsten (12, 14) zugeführt wird. Zur Reinigung des Kollektors (16) von Ablagerungen in den Isolationsspalten am Umfang des Kollektors wird die dem Motor (10) zugeführte Leistung in zeitlichen Abständen über den durch den Einsatz des Motors (10) vorgegebenen Leistungsbedarf hinaus erhöht, vorzugsweise jeweils auf die Maximaldrehzahl und Maximalleistung des Motors.

## Beschreibung

### Stand der Technik

Die Erfindung geht aus einem Verfahren zum leistungsgesteuerten Betreiben eines Elektromotors an einem Gleichspannungsnetz, insbesondere eines am Bordnetz eines Kraftfahrzeuges mittels Pulsweitenmodulation getaktet betriebenen Permanentmagnetmotors, wie er in Kraftfahrzeugen verwendet wird, beispielsweise als Kühlgebläsemotor.

Zur Reinigung des Kollektors eines derartigen, mit Kohlebürsten betriebenen Elektromotors ist es aus der DE 102 15 214 A bekannt, am Stator des Elektromotors ein Reinigungsmodul mit einer beweglichen Reinigungsbürste anzuordnen, die mittels einer Feder auf den Kollektor gedrückt und mittels eines Elektromagneten bei Anliegen einer elektrischen Spannung am Elektromotor zurückgezogen wird. Hierdurch soll eine ungleichmäßige Abnutzung des Kollektors verhindert und die Lebensdauer des Elektromotors verlängert werden. Zur Reinigung ist dabei jedoch eine zusätzliche Bürstenvorrichtung, vorzugsweise mit einer mit Glasfasern durchsetzten Bürste erforderlich, welche die Fertigungskosten und den Montageaufwand des Motors erhöhen.

Weiterhin ist in der DE 196 14 673 A ein Verfahren zum Betrieb eines Gleichstrommotors beschrieben, dessen Wicklungen über stehende Bürsten und einen sich drehenden Kollektor im Normalbetrieb eine Gleichspannung zuführbar ist. Zur Reinigung des Kollektors wird der Motor in zeitlichen Abständen von der Gleichspannung abgetrennt und mit einer Wechselspannung derart hoher Frequenz beaufschlagt, dass sich der Motor nicht dreht und der Strom im Wesentlichen statt durch die Kollektorwicklungen über einen etwa vorhandenen metallischen Schluss zwischen den Kollektorlamellen fließt und hierbei den metallischen Abrieb durchbrennt. Auch ein derartiges Verfahren ist wegen der zusätzlich erforderlichen konstruktiven und schaltungstechnischen Maßnahmen aufwendig und verteuert daher die Herstellung des Motors in beachtlichem Maße.

Der Erfindung liegt die Aufgabe zugrunde, ein Verfahren zum Reinigen des Kollektors eines an einem Gleichspannungsnetz betreibbaren, leistungsgesteuerten Elektromotors anzugeben, welches mit geringem Zusatzaufwand durchführbar ist und eine wirksame Reinigung des Kollektors und somit einer Verlängerung der Lebensdauer eines gattungsgemäßen Motors ermöglicht. Dies wird erreicht durch die kennzeichnenden Merkmale des Anspruchs1.

Das erfindungsgemäße Verfahren hat sich besonders bewährt für Gleichstrommotoren in Kraftfahrzeugen, welche über eine Ansteuerelektronik zur Reduzierung der Leistungsaufnahme und des Geräuschs getaktet betrieben werden. Hierzu zählen beispielsweise Kühlgebläsemotoren von Kraftfahrzeugen, die stark veränderlichen Leistungsanforderungen unterliegen, aber auch Motoren zum Antrieb von Schiebedächern, Wischern, Fensterhebern und dergleichen. Eine Verschmutzung der Kollektoren solcher Motoren entsteht insbesondere durch Kohleablagerungen in den Kollektorspalten und führt längerfristig zu einem Leistungsverlust und schließlich zu einem Kurzschluss und Ausfall des Systems. Die Verschmutzung entsteht speziell in Betriebsfällen, in denen der Motor häufig mit niedriger Drehzahl und Leistung betrieben wird, was beispielsweise bei Kühlgebläsemotoren der Fall ist, wenn die Kraftfahrzeuge in klimatisch kalten Gegenden oder dauerhaft zurückhaltend gefahren werden. Bei Motoren mit abtriebsseitig montiertem Lüfterrad oder Schaufelrad ist Fremdbetrieb die Hauptursache für zugesetzte Kommutatorschlitze. Bekannt ist dieser Effekt als sogenanntes "windmilling". Es wird zumeist durch Fahrtwind verursacht, kann jedoch auch bei Motoren auftreten, die eine Welle oder ein Ritzel antreiben und im Leerlauf stromlos mitlaufen.

Als zweckmäßig hat es sich erwiesen, wenn zur Reinigung des Kollektors die Leistung des Motors in zeitlichen Abständen bis zum Maximalwert von Motordrehzahl und Motorverlustleistung erhöht wird, weil hierdurch ohne zusätzliche konstruktive oder schaltungstechnische Maßnahmen insbesondere der durch den Abrieb der Bürsten entstehende Kohlestaub, welcher sich in den Isolationsspalten zwischen den Kollektorlamellen ablagert, weggebrannt oder weggeschleudert wird.

Ein besonders zweckmäßiges und ohne Zusatzaufwand durchführbares Verfahren ergibt sich, wenn des Tastverhältnis der Pulsweitenmodulation des Motorstromes durch die Steuereinheit des Elektromotors in zeitlichen Abständen auf 100 % erhöht wird, also auf einen Betriebszustand mit maximaler Motordrehzahl und Motorverlustleistung, in dem die störenden Ablagerungen erfahrungsgemäß praktisch nicht auftreten. Als Kriterien für die Wahl des Zeitpunktes und der Dauer der Leistungserhöhung eignen sich die Betriebsdauer des Motors, insbesondere die Betriebsdauer mit reduzierter Motorleistung, die Anzahl der Einschaltvorgänge des Motors oder eine Leistungserhöhung nach dem Zufallsprinzip. Eine weitere vorteilhafte Möglichkeit zur Steuerung der Leistungserhöhung besteht in der Überwachung von Unregelmäßigkeiten des Motorverhaltens, also eine Fehlererkennung beispielsweise aus einer gegenüber der Solldrehzahl in einem vorgegebenen Betriebszustand verringerten Istdrehzahl des Motors.

Weitere Einzelheiten und vorteilhafte Ausgestaltungen der Erfindung ergeben sich aus der Beschreibung des Ausführungsbeispiels.

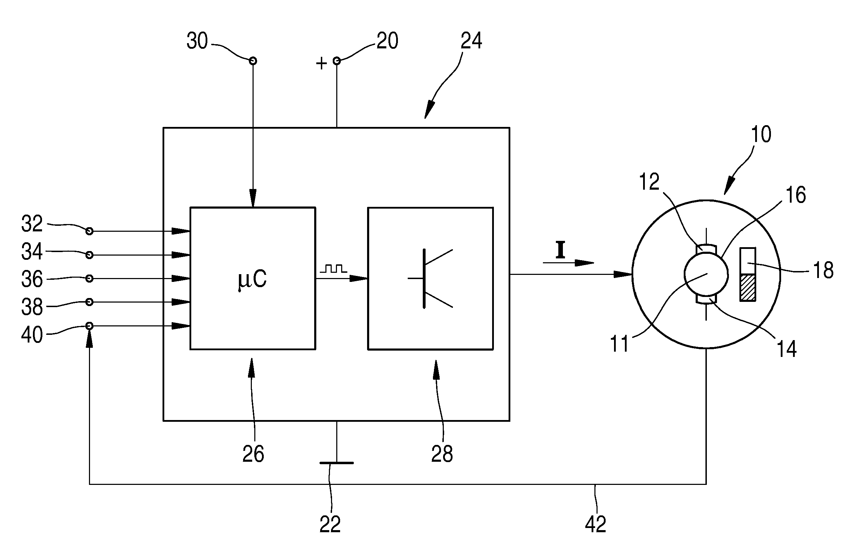

Die Zeichnung zeigt eine Prinzipschaltung eines getaktet betriebenen Permanentmagnetmotors.

In der Figur ist mit 10 ein permanentmagnetisch erregter Gleichstrommotor bezeichnet, dessen Anker 11 über Bürsten 12 und 14 mit einem Ankerstrom I gespeist wird. Die Bürsten 12 und 14 sind ortsfest angeordnet und kontaktieren einen Kollektor 16. Der Motor ist fremderregt durch einen Dauermagnet 18, welcher im Stator des Motors 10 angeordnet ist.

Die dem Motor 10 aus einem Gleichspannungsnetz mit einem Pluspol 20 und einem Massepol 22 zugeführte Leistung wird durch Pulsweitenmodulation des Ankerstromes I gesteuert. Die Motorsteuerung ist insgesamt mit 24 bezeichnet, sie enthält eine Steuereinheit 26 für den Motorstrom in Form eines Mikrocontrollers und eine Endstufe 28 für die Bereitstellung des Ankerstromes I. Die Steuerung der Motorleistung durch den Mikrocontroller 26 erfolgt im Normalbetrieb bedarfabhängig über einen Eingang 30 entsprechend der geforderten Motorleistung.

Die Erhöhung der Motorleistung zur Reinigung des Kollektors 16 des Motors 10 wird alternativ oder kumulativ über weitere Eingänge 32, 34, 36, 38 und 40 des Mikrocontrollers 26 oder über seine Software-Abhängigkeiten gesteuert. Hierbei kann dem Mikrocontroller 26 über den Eingang 32 ein Signal zugeführt werden, welches entsprechend der Betriebsdauer des Motors 10 unabhängig von der eingespeisten Leistung erzeugt und nach einer vorgegebenen Einschaltdauer unabhängig von der aktuell erforderlichen Motorleistung den Motor für eine vorgebbare Zeitspanne auf maximale Motordrehzahl und Motorverlustleistung schaltet entsprechend einem Tastverhältnis der Pulsweitenmodulation des Ankerstromes I von 100 %. Die Einschaltdauer bei jeder derartigen Leistungserhöhung wird durch Versuche so festgelegt, dass eine ausreichende Kollektorreinigung sichergestellt ist. Je nach Anwendungsfall kann hierbei die an den Motor 10 angeschlossene Last abgekoppelt oder mit auf maximale Drehzahl hochgefahren werden, beispielsweise bei einem Lüfterantrieb, dessen Hochlauf keine Gefahr oder Schaden begründet. Über den Eingang 34 kann analog zu den vorhergehenden Ausführungen ein Steuersignal zur Leistungserhöhung des Motors 10 eingespeist werden, welches in Abhängigkeit von Dauer und/oder Betrag einer Reduktion der Motorbetriebsleistung im Betrieb erzeugt wird. Je niedriger die Motorbetriebsleistung ist, desto geringer ist erfahrungsgemäß die Selbstreinigung des Kollektors 16 des Motors 10, weshalb bei niedrigen Motorbetriebsleistungen häufiger eine Anhebung der Motorleistung zur Reinigung des Kollektors 16 erforderlich ist.

Das über den Eingang 36 dem Mikrocontroller 26 zugeführte Steuersignal zur Leistungserhöhung des Motors 10 wird in Abhängigkeit von der Gesamtanzahl der Einschaltvorgänge des Motors 10 erzeugt. Ein derartiges Signal ist ohne zusätzliche Zeitglieder und ohne Erfassung der jeweiligen Motorleistung in besonders einfacher Weise durch einen Zähler oder auch innerhalb des Mikrocontrollers 26 durch Software bereitstellbar.

Eine weitere Möglichkeit zur Steuerung der Leistungserhöhung des Motors 10 besteht darin, dem Mikrocontroller 26 nach einem Zufallsprinzip über den Eingang 38 ein Signal zur Erhöhung der Motorleistung zuzuführen. Durch einen derartig gesteuerten Reinigungsprozess für den Kollektor 16 kann ausgeschlossen werden, dass trotz Überwachung des Motorbetriebs beispielsweise auf Grund veränderlicher Umgebungsbedingungen sich auf dem Kollektor 16 Ablagerungen bilden, welche einen regulären Motorbetrieb beeinträchtigen.

Eine weitere Alternative zur Steuerung der Leistungserhöhung des Motors 10 besteht schließlich darin, über den Eingang 40 dem Mikrocontroller 26 ein Signal zuzuführen, welches in Abhängigkeit von Unregelmäßigkeiten des Motorverhaltens erzeugt wird. Diese Art der Steuerung ist schematisch angedeutet durch eine Verbindung 42 zwischen dem Motor 10 und dem Eingang 40, über welche beispielsweise eine Abweichung der Istdrehzahl des Motors von der dem aktuellen Tastverhältnis der Pulsweitenmodulation des Ankerstromes I entsprechenden Solldrehzahl ein Signal zur Leistungserhöhung liefert.

Durch die vorgenannten Maßnahmen kann somit alternativ, aber auch durch Zusammenführung mehrerer Steuersignale, eine wirksame Reinigung des Kollektors 16 eines Elektromotors von Ablagerungen im Bereich der Isolationsspalte zwischen den einzelnen Kollektorlamellen erfolgen. Im Wesentlichen geschieht dies durch ein Wegbrennen der Ablagerungen im Kollektorspalt, aber auch durch ein Abschleudern der Ablagerungen beim Hochfahren des Motors auf seine Maximaldrehzahl. Die bei Betrieb des Motors mit reduzierter Leistung auftretende Kollektorverschmutzung wird so dauerhaft vermieden und Störungen des Motorbetriebs oder ein vorzeitiger Ausfall des Motors wirksam verhindert.

## Patentansprüche

1. Verfahren zum leistungsgesteuerten Betreiben eines Elektromotors an einem Gleichspannungsnetz, insbesondere eines am Bordnetz eines Kraftfahrzeuges mittels Pulsweitenmodulation getaktet betriebenen Permanentmagnetmotors, dessen Leistung dem Anker des Motors über einen Kollektor und über Bürsten zuführbar ist, **dadurch gekennzeichnet, dass** die zugeführte Leistung in zeitlichen Abständen über den durch den Einsatz des Motors (10) vorgegebenen Leistungsbedarf hinaus erhöht wird.

2. Verfahren nach Anspruch 1, **dadurch gekennzeichnet, dass** die Leistung des Motors (10) in zeitlichen Abständen bis zum Maximalwert von Motordrehzahl und Motorverlustleistung erhöht wird.

3. Verfahren nach Anspruch 1 oder 2, **dadurch gekennzeichnet, dass** das Tastverhältnis der Pulsweitenmodulation der Motorleistung durch die Steuereinheit (26) des Motors (10) in zeitlichen Abständen auf 100 % erhöht wird.

4. Verfahren nach einem der Ansprüche 1 bis 3, **dadurch gekennzeichnet, dass** die Steuerung der Leistungserhöhung in Abhängigkeit von der Betriebsdauer des Motors (10) erfolgt.

5. Verfahren nach einem der Ansprüche 1 bis 3, **dadurch gekennzeichnet, dass** die Steuerung der Leistungserhöhung in Abhängigkeit von der Dauer und/oder dem Betrag der Reduktion der Motorbetriebsleistung erfolgt.

6. Verfahren nach einem der Ansprüche 1 bis 3, **dadurch gekennzeichnet, dass** die Steuerung der Leistungserhöhung in Abhängigkeit von der Anzahl der Einschaltvorgänge des Motors (10) erfolgt.

7. Verfahren nach einem der Ansprüche 1 bis 3, **dadurch gekennzeichnet, dass** die Steuerung der Leistungserhöhung nach einem Zufallsprinzip erfolgt.

8. Verfahren nach einem der Ansprüche 1 bis 3, **dadurch gekennzeichnet, dass** die Steuerung der Leistungserhöhung in Abhängigkeit von Unregelmäßigkeiten des Motorverhaltens erfolgt.
